## Europäisches Patentamt
## European Patent Office
## Office européen des brevets

(19)

(11) Veröffentlichungsnummer: **0 031 091**
A2

(12)

# EUROPÄISCHE PATENTANMELDUNG

(21) Anmeldenummer: **80107823.9**

(22) Anmeldetag: **11.12.80**

(51) Int. Cl.3: **A 23 L 1/31**
**A 23 B 4/04**

(30) Priorität: 20.12.79 DE 2951415

(43) Veröffentlichungstag der Anmeldung:
01.07.81 Patentblatt 81/26

(84) Benannte Vertragsstaaten:
AT BE CH DE FR GB IT LI LU NL SE

(71) Anmelder: TRAMP Fleischerzeugnisse GmbH & Co
Kommanditgesellschaft Produkte für Menschen
unterwegs
Westerholter Strasse 750-770
D-4352 Herten(DE)

(72) Erfinder: Wellhäuser, Robert, Dr.
Puchheimerstrasse 24
D-8060 Dachau(DE)

(72) Erfinder: Gehra, Hartmut, Dr.
am Oberfeld 4
D-8080 Fürstenfeldbruck(DE)

(72) Erfinder: Pfeiffer, Gottfried, Dr.
Hufeisenstrasse 13
D-8051 Eching(DE)

(74) Vertreter: Hansen, Bernd, Dr.rer.nat. et al,
Hoffmann . Eitle & Partner Patentanwälte
Arabellastrasse 4
D-8000 München 81(DE)

(54) **Getrocknetes Fleischprodukt aus gestückeltem, gewürztem Fleisch, Verfahren zu dessen Herstellung, sowie Verwendung des Fleischproduktes.**

(57) Ein getrocknetes Fleischprodukt auf Grundlage von gestückeltem, gewürztem Fleisch mit einem Fettgehalt von 20 Gew.-% oder weniger, das durch Garen des Fleisches in einer Form unter Vakuum und Reifung des geformten Produktes unter kontrollierten Trocknungsbedingungen erhalten wird, wobei das Produkt das Aussehen rohbelassenen, getrockneten Fleisches besitzt. Das Produkt eignet sich beim Schnitt in dünne Scheiben insbesondere als Diätnahrung oder für unterwegs.

EP 0 031 091 A2

Croydon Printing Company Ltd.

Getrocknetes Fleischprodukt aus gestückeltem, gewürztem Fleisch, Verfahren zu dessen Herstellung, sowie Verwendung des Fleischproduktes

---

Die Erfindung betrifft ein Fleischprodukt aus gestückeltem, gewürztem Fleisch, das erhältlich ist durch Zerkleinern von rohem Fleisch, (Vakuum)Einbringung des gestückelten Fleisches in die Form, Garen der Masse, und Reifung bzw. Trocknung des Produktes, Verfahren zur Herstellung dieses Fleischproduktes sowie dessen Verwendung.

Fleisch- und Wurstprodukte unterschiedlichsten Typus stehen heute dem Verbraucher zur Verfügung. Die überwiegend aus Fleisch bestehenden Produkte werden auf unterschiedlichste Weise vom Schlachter bzw. der Hausfrau geschaffen. Fleischprodukte werden zum Teil in Form von Braten oder anderen grossen Stücken, aber auch in abgeteilter Form, z.B. als Kotelett, Schnitzel,etc., offeriert. Das Angebot umfasst auch Fleisch, das in roh belassener Form konditioniert worden ist, wobei die Art der Bearbeitung nach regionaler Geschmacksempfindung schwanken kann, z.B. bei Räucherschinken, Bündner-Fleisch, etc.. Schliesslich wird Fleisch auch in fein zerteilter Form, z.B. geschnetzelt oder gewolft, zur Herstellung typischer Gerichte, wie Kalbsgeschnetzeltes, Frikadellen, Gulasch, etc., angeboten.

Es sind auch sogenannte "beef jerkys" bekannt, die durch eine spezielle Pökelungsbehandlung geschnittener Rindfleischstücke und eine Garung und Räucherung der geschnittenen Einzelscheiben hergestellt werden. Diese Produkte sind häufig mit einer Würzschicht überzogen, die den Eindruck natürlich gewachsenen Fleisches verhindert. Nach Angaben von Herstellern von "Beef jerkys" ist die Einstellung einer gleichbleibenden Qualität bzw. eines gleichmässigen Geschmackseindruckes nur schlecht möglich. Derartige Herstellungstechniken sind beispielsweise in Snack Food 50 (4) 46-49, 1970, beschrieben.

Es ist auch die Herstellung von sogenannten Fleisch-Chips beschrieben worden (Pakistan Journal of Agricultural Sciences 13 (1) 113-116 [1976]), bei dem getrocknete Rindfleischscheiben auf einen Restwassergehalt von 2 bis 3 % gefriergetrocknet und anschliessend gebraten werden. Die hierbei angewandte Methode ist aufwendig und die resultierenden Produkte weisen keine befriedigenden reinen Fleischgeschmacksnoten auf.

Schliesslich ist die Herstellung von getrockenten Rindfleischscheiben durch Einfüllen von Rindfleischstücken zusammen mit Würzen in Därme, Garung des Rindfleisches in den Därmen und Trocknung des Fleisches durch Eintauchen in wässrige Salzlösungen bei höheren Temperaturen in der US-PS 4 053 649 beschrieben worden. Die nach diesem Verfahren zugänglichen getrockneten Fleischprodukte weisen ebenfalls keine optimalen Geschmackseigenschaften auf, was zum Teil auf die Auslaugung in wässriger Salzlösung bei höherer Temperatur zurückgeführt werden kann. In der US-PS 3 497 361 ist ebenfalls u.a. die Herstellung eines solchen getrockneten Rindfleischproduktes beschrieben worden, bei dem die Garung bei höheren Temperaturen während Zeiträumen von mehreren Tagen durchgeführt wird. Durch die Einstellung einer niedrigen relativen Luftfeuchte während der lang andauernden Garung in der Hitze ergeben sich starke Schrumpfungserscheinungen und auch die Ausbildung optimaler Geschmacksnoten ist nicht möglich.

Trotz der vielfältigen Angebotes an Fleischprodukten besteht eine ständige Nachfrage nach solchen Waren, die in ihrem optischen Erscheinungsbild und ihrem Geschmack hohen Anforderungen genügen und zu einer Bereicherung der verfügbaren Warenpalette beitragen. Darüber hinaus wird häufig nach im Nährwert hochstehenden Lebensmitteln mit geringem Fettanteil verlangt. Schliesslich besteht im Zuge der zunehmenden Reisetätigkeit auch eine wachsende Nachfrage nach Fleischprodukten, die in Geschmack, Erscheinungsbild und Nährwert auf die Bedürfnisse der Menschen unterwegs abgestellt sind.

Der Erfindung liegt die Aufgabe zugrunde, ein neuartiges Nahrungsmittel auf Basis von Fleisch und Verfahren zu deren Herstellung zu schaffen, das den vorstehend angeführten Bedürfnissen gerecht wird. Insbesondere soll es sich hierbei um ein qualitativ hochwertiges Lebensmittel mit hohem Nährwert mit beliebig gering wählbarem Fettanteil, einschliesslich weitgehend fettgewebefreier Produkte handeln, deren optisches Erscheinungsbild ansprechend ist. Trotz der Herstellbarkeit des Produktes aus Fleischteilen, gegebenenfalls unterschiedlicher Provenienz und Grösse, soll das Produkt sich dem Erscheinungsbild natürlich gewachsenen Fleisches, insbesondere eines rohbelassenen, getrockneten und gereiften Fleisches, möglichst vollkommen annähern bzw. diesem gleichkommen.

Diese Aufgabe wird durch die Bereitstellung eines getrockneten Fleischproduktes aus gestückeltem, gewürztem Fleisch der eingangs genannten Art gelöst, das erhältlich ist durch das Garen der Masse in der Form unter Vakuum und die Trocknung und Reifung des geformten Produktes bei ca. 5 - 25°C bei einer relativen Feuchte von ca. 50 bis 80 % auf einen Restwassergehalt von 35 - 50 Gew.-%, bezogen auf das Gewicht des Endproduktes, unter Verfestigung, derart, dass das Produkt das Aussehen rohbelassenen, getrockneten Fleisches besitzt.

- 4 -

In dem erfindungsgemässen Fleischprodukt kann Fleisch unterschiedlichster Herkunft, wie z.B. Rindfleisch, Kalbfleisch, Schweinefleisch oder Fleisch von Geflügel, gegebenenfalls sogar Fisch, wie auch Kombinationen hiervon eingesetzt werden. Derzeit ist die Verwendung eines zumindest hohen Anteils an schierem Rindfleisch bevorzugt.

Das erfindungsgemässe Fleischprodukt ist in charakteristischer Weise, ausgehend von gestückeltem Fleisch, erhältlich. Nach einer Ausführungsform ist es aus einem grösseren Anteil Fleisch in etwa taubenei- bis hühnereigrosser Stückelung und einem kleineren Anteil Fleisch mit geringerer Partikelgrösse zusammengesetzt. Begünstigt durch den hohen Anteil von Fleisch, beispielsweise im Bereich von 60 bis 90%, mit grösserer, aber auch bei kleinerer Stückelung, kann das Endprodukt das typische Aussehen natürlich gewachsenen Fleisches annehmen, wobei dieser Eindruck durch die Verwendung eines einheitlichen Fleischtypus, beispielsweise lediglich Fleisch vom Rind oder lediglich Fleisch vom Schwein, etc., verstärkt wird. Die grösseren bzw. gröberen Fleischstücke werden durch den in geringen Teilchengrössen vorliegenden Fleischanteil nach entsprechender Vermengung gut gebunden. Aus diesem Grunde ist es vorteilhaft, einen kleineren Anteil an Fleisch in sogenanntes "bindiges Brät" unter Verwendung üblicher Zerkleinerungsvorrichtungen überzuführen. In diesem "bindigen Brät" liegt die Fleischmasse in Fein- bzw. Feinstzerkleinerung vor, wobei deren Fettanteil, sofern ein solcher merklich vorhanden ist, emulgiert sein kann. Als Vorrichtungen können beispielsweise Wölfe, Kutter bzw. Durchlaufkutter, gegebenenfalls mit Vakuumanwendung, herangezogen werden, mit denen Zerkleinerungs-, Vermischungs- und Dispergiergrade im kolloidalen Bereich erzielbar sind. Bei der Fein- bzw. Feinstzerkleinerung des "bindigen Brätes" aus Fleisch kann gleichzeitig Eis und Salz zugeführt werden. Durch die Eiszufügung wird die bei der Zerkleinerung auftretende Reibungswärme ohne lokale Überhitzung abgeführt.

Wenngleich das erfindungsgemässe Fleischprodukt nach einer Ausführungsform aus einem höheren Anteil grobstückigerem Fleisch mit einem geringeren Anteil von Fleisch in feinzerteilter Form (sogenanntes "bindiges Brät") zusammengesetzt sein kann, ist es ebenfalls möglich, das Fleischprodukt ausschliesslich aus grobstückigerem Fleisch zu erzeugen. In einem solchen Fall kann die Haftung der grobstückigeren Fleischteile aneinander durch andere Massnahmen verbessert werden, wobei beispielsweise das Fleisch in sogenannten Tumbel- bzw. Massiergeräten eine Oberflächenklebrigkeit erreichen kann, die die Zusammenfügung begünstigt.

Eine bevorzugte Ausführungsform der Erfindung ist auf die teilweise bis ausschliessliche Verwendung von Fleischstücken einer durchschnittlichen Teilchengrösse von 8 bis 20 mm gerichtet, wobei besonders günstige Ergebnisse im Bereich von 10 bis 15 mm erzielbar sind. Überraschenderweise ergibt sich auch beim Einsatz solcher relativ geringer Teilchengrössen der Eindruck natürlich gewachsenen Fleisches.

Nachdem von Fleischstücken unterschiedlicher Grösse bzw. Fleischstücken gleicher Grösse ausgegangen wird, werden diese zu einer dichten Masse vermischt bzw. vermengt. Geräte, in denen diese Vermischung durchgeführt werden kann, sind bekannt. Mit Vorteil wird die Vermengung der Fleischstücke in einem Vakuummischer durchgeführt, da hierdurch besonders dichte, weitgehend luft- und porenfreie Mischungen zugängig sind.

Diese Masse wird zur Herstellung des erfindungsgemässen Fleischproduktes bündig in eine Form eingedrückt. In dem Falle, wo bei der vorhergehenden Vermischung diese unter Vakuum bzw. Teilvakuum durchgeführt worden ist, wird vorteilhaft auch die Einfüllung des Fleischgemenges in die Form unter Vakuum vollzogen. Wenngleich die Geometrie und die Eigenschaften der Form in gewissem Rahmen variieren können, sollte diese doch den Beanspruchungen eines Erhitzungsvorganges, unter Vakuum, standhalten. Es ist ausreichend, wenn die Form,die vorzugsweise eine Metallform darstellt, in einer Dimension nur eine relativ geringe Ausdehnung besitzt, bzw. die Einführung und Eindrückung des Fleischgemenges in die Form nur bis zu einer relativ niedrigen Höhe erfolgt. So ist es bevorzugt, dass die Höhe des eingedrückten Fleisches derart ist, dass das gegarte und anschliessend nach Herausnahme getrocknete Produkt eine Höhe von ca. 80 mm und bevorzugt 50 mm, nicht übersteigt. Durch diese niedrige Füllhöhe wird der nach der Garung folgende Trocknungs- und Reifungsvorgang erleichtert, da dann der Transport des auszutreibenden Wassers in homogener Weise etc. erfolgen kann. Andererseits ist es auch besonders vorteilhaft, wenn eine Einfüllhöhe nicht unterschritten wird, die bei dem geformten Produkt nach Verfestigung bei der Trocknung und Reifung eine Höhe von mehr als 20, zweckmässig 25 mm und besonders bevorzugt 30 mm, ergibt.

Durch die Trocknung und Reifung des Produktes im derart geformten Zustand, wobei zweckmässig die angegebene Endhöhe nicht unterschritten wird, ergibt sich die Ausbildung besonders günstiger Aromanoten. Das Produkt unterscheidet sich damit vorteilhaft von sogenannten "beef jerkys", die üblicherweise eine Garung und/oder Trocknung im bereits geschnittenen Zustand erfahren. Durch diese herkömmliche Technik wird die Ausbildung schaler Aromanoten begünstigt, die bei den "beef jerkys" durch aufgebrachte Würzüberzüge ausgeglichen werden müssen. Dadurch weisen diese Produkte aber nicht mehr das Aussehen natürlich gewachsenen Fleisches auf.

Nach einer bevorzugten Ausführungsform der Erfindung werden die vermengten Fleischstücke in einem Kunststoffschlauch in die Form eingebracht und in dem Schlauch an den Formwandungen angedrückt, wobei das Fleisch bereits in den Kunststoffschlauch bzw. die Folie unter Vakuum eingesiegelt und in die Form abgefüllt sein kann.

Alternativ kann das Fleischgemenge auch in die Form bei Normaldruck eingefüllt und die eingeschlossene und "anhängige" Luft durch eine geeignete Massnahme zumindest teilweise vertrieben werden. Es ist nämlich eine charakteristische Eigenschaft des erfindungsgemässen Produktes, dass hierin im wesentlichen keine Luftblasen eingeschlossen sind, was nur zum Teil durch mechanischen Druck, andererseits aber besonders vorteilhaft durch Anlegen eines Vakuums beim Mischen wie Garen bzw. Kombinationen beider Massnahmen erreicht werden kann. Anstelle der Verwendung der eingesetzten Kunststofffolie, die auch die Herausnahme des Fleischproduktes aus der Form erleichtert, ist es in alternativer Weise auch möglich, das Fleischprodukt direkt in die Form einzubringen und, z.B. durch einen bewegbaren Deckel, die in dem Produkt eingeschlossene Luft durch Druck aus geeigneten Öffnungen der Form auszupressen.

Durch die Ausführung der Luft wird erreicht, dass nicht nur im Produkt Poren und Zwischenräume vermieden sind, sondern auch, dass die Oberfläche - dann wenn die Oberfläche der Form glatt oder natürlich genarbt ist - des Produktes ebenfalls in glatter oder natürlich genarbter Weise wiedergegeben wird. Durch das Anlegen eines Vakuums bzw. Teilvakuums ist es auch möglich, die Oberfläche der Folie oder die Oberfläche der Form spiegelbildlich auf der Fleischproduktaussenseite auszubilden. Dies kann beispielsweise zur Ausbildung einer reliefartigen Struktur, die natürlicher Fleischoberfläche ähnelt, ausgenützt werden. Produkte, die an ihrer Oberfläche, z.B. der Oberseite, eine Struktur natürlicher Fleischoberfläche zeigen, sind besonders bevorzugt. Schliesslich wirkt sich das Vakuum während des Garungsvorganges auch dadurch günstig aus, dass der Fleischsaft am Austritt aus dem Produkt gehindert ist, was zur Ausbildung günstiger Aromanoten beiträgt.

Als Kunststoffschlauch kann beispielsweise ein endloser Folienschlauch dienen, der portionsweise unter Vakuum versiegelt und in die Form eingebracht wird.

Bis zu diesem Zeitpunkt kann bereits eine Würzung und Aromatisierung des Fleischproduktes erfolgt sein, beispielsweise durch Pökelung, Würzung, etc., der verwendeten Fleischstücke. Infrage kommende Gewürze sind dem Fachmann bekannt und nur beispielhaft soll auf die Verwendung von Pfeffer, Muskat, Saccharose, Ascorbinsäure bzw. sonstige organische Genussäuren, verwiesen werden. Auch ist es möglich, das verwendete Fleisch vor der Zerkleinerung für einen längeren Zeitraum zu pökeln, beispielsweise Rindfleisch im Verlauf von 2 bis 3 Tagen im Bereich niedriger Temperaturen, z.B. bei +4° bis +6°C.

Das in die Form eingefüllte, vorzugsweise glatt eingestrichene Fleischprodukt wird dann hierin, besonders vorteilhaft im Teilvakuum, einer schonenden Garung unterzogen. Hierbei wird das Fleischprodukt überlicherweise, je nach Art des herangezogenen Fleisches, dessen "Vorgeschichte" und der geometrischen Ausbildung der Form im allgemeinen höheren Temperaturen im Bereich von 50 bis 80°C im Verlauf einiger Stunden ausgesetzt. Hierbei unterbleiben vorteilhaft Fettoder Ölzusätze.

Es ist günstig, wenn die Temperatur des Kerns des Fleischproduktes etwa 80°C nicht übersteigt, wobei Temperaturen im Kern von etwa 60 bis 70°C bevorzugt sind. Durch die Anwendung höherer Temperaturen als die hier angegebenen und über längere Zeiträume wird die Ausbildung von Hocherhitzungs-Geschmacksnoten begünstigt, die weniger bevorzugt sind. Auch ist es schwieriger, das gewünschte Aroma und den gewünschten kräftig-elastischen Biss dann zu erreichen.

Das beim Garen angewandte Vakuum kann im breiten Bereich schwanken. Besonders günstige Ergebnisse wurden bei Unterdrücken von etwa 5 bis 25 Torr erzielt. Es kann jedoch auch bei geringerem Unterdruck, z.B. im Bereich von 80 bis 150 Torr, gegart werden, wobei sich dann die Garzeiten etwas erhöhen können. Der durch das Garen im Vakuum erzielte Vorteil liegt u.a. darin, dass hierbei der Austritt von Fleischsaft verringert und dadurch die Ausbildung optimaler Aromanoten begünstigt wird. Auch wird durch eine Vakuumanlegung der Austritt von im Produkt eingeschlossenen Luftblasen sichergestellt, die selbst durch eine Vakuummischung bzw. Vakuumeinfüllung in die Form allein häufig nicht mit Sicherheit austreibbar sind. Durch die Vakuumgarung wird schliesslich eine besonders schonende Behandlung möglich. Hierbei erfolgt im allgemeinen keine Zufügung von Öl oder Fett.

Auch wurde festgestellt, dass, wenn das Garen ohne Teilvakuum durchgeführt wird, das optische Erscheinungsbild, wie auch die Geschmacksausbildung nicht so begünstigt sind.

Das aus der Form und aus der Kunststoffolie, sofern eine solche verwendet wurde, ausgelöste Endprodukt wird dann während längerer Zeit in einem üblichen Reiferaum einer Trocknung und Reifung unterworfen. Hierbei wird der Wassergehalt des Produktes unter etwa 70 Gew.-%, bezogen auf das
Gewicht des Endproduktes, und bevorzugt unter 50 Gew.-%,
wobei ein Bereich von etwa 45 bis 35 Gew.-% besonders bevorzugt ist, bezogen auf das Endprodukt, gebracht. Zu diesem
Zweck kann das Fleischprodukt, das durch den Garungsvorgang,
begünstigt durch die Vakuumanlegung, eine Verfestigung erfahren hat, in Gestellen aufgestellt und gegebenenfalls aufgehängt werden. Die Trocknung des Produktes erfolgt vorteilhaft bei ca. 5 bis 25°C, bevorzugt bei 5 bis 15°C, und einer
relativen Feuchte von 50 bis 80 %. Insbesondere haben sich
Reifungs- bzw. Trocknungsbedingungen bei einer relativen
Feuchte von 65 bis 78% als besonders günstig erwiesen. Für
die Trocknung, die im Anschluss an das Garen vorgesehen ist,
wird das Produkt im allgemeinen aus der Form herausgenommen,
um den Wasseraustritt nicht zu behindert . Die Trocknung kann
bei etwa Atmosphärendruck erfolgen. Es ist auch möglich,
während der Trocknung des Produktes dieses zusätzlich im Hinblick auf eine Aromabeibringung zu behandeln. Zu diesem
Zweck kann beispielsweise während und/oder nach der Reifung
eine Räucherung durchgeführt werden.

Das erfindungsgemässe Nahrungsmittel kann in nahezu beliebiger Form hergestellt werden. Im Gegensatz zur Herstellung
von Bündner-Fleisch ist beispielsweise die Breite des erfindungsgemässen Produktes nicht durch die natürliche Muskelbreite festgelegt, sondern kann; sofern dies wünschenswert
ist, in beliebiger Weise vergrössert werden. Nach einer
bevorzugten Ausbildungsform des erfindungsgemässen Fleischproduktes wird dieses jedoch in einer im wesentlichen plattenartigen Form niedriger Höhe bzw. in einer Rundform bzw.
ellipsoiden Form niedrigen Durchmessers erzeugt. Durch die Ausbildung einer geringen Höhe des Produktes sowie den Garvorgang wird die nachfolgende Trocknung besonders begünstigt.

Das erfindungsgemässe Fleischprodukt, das aus gegartem
Fleisch gebildet ist, bzw. dieses in überwiegendem Anteil
enthält, kann somit nach einer bevorzugten Ausführungsform
der Erfindung aus gestückeltem Fleisch, das einen festen Verbund ausbildet, bestehen, der im wesentlichen Plattenform
hat und porenfrei ist, wobei die Höhe des Verbundes unter
ca. 80 mm und der Wassergehalt unter etwa 70 Gew.-%, bezogen
auf das Endprodukt, liegt. Durch eine Plattenform bzw. im
wesentlichen rechteckige Form des erfindungsgemässen Nahrungsmittels, die durch die Verwendung einer entsprechenden
Garform und die Vornahme des Garens vorteilhaft unter Vakuum
bzw. unter Auspressung von anhaftender Luft erreicht wird,
kann nicht nur der Schnitt des erfindungsgemässen Fleischproduktes, sondern auch die diesem vorhergehende Lagerung
(wie auch Trocknung) erleichtert werden.

Der Fettgehalt des erfindungsgemässen Produktes beträgt
vorteilhaft 20 bis 10 Gew.-% oder weniger. Das Produkt
zeichnet sich gleichzeitig durch einen hohen Gehalt an Eiweiss
aus, der im Bereich von etwa 30 bis 50 Gew.-% liegen kann.

Ein im Rahmen der Erfindung besonders bevorzugtes Nahrungsmittel ist aus stückigen Fleischteilen, vorzugsweise schierem Rindfleisch gebildet, die unter Ausbildung eines festen
porenfreien Verbundes zu einer plattenartigen Form zusammengesetzt sind, dessen Höhe bei 25 bis 55 mm und Breite bei
60 bis 150 mm und dessen Wassergehalt bei 35-45 Gew.-%, bei
einem Fettanteil unter 20 Gew.-%, bevorzugt unter 15 Gew.-%, liegt.

Vorzugsweise besitzt das Produkt an der Ober- und/oder Unterseite eine Strukturierung, z.B. Narbung oder Gitterstruktur.

Das erfindungsgemässe Fleischprodukt kann nach einer bevorzugten Ausführungsform auch zusätzlich Anteile anderer Nahrungsmittel bzw. Nahrungsmittelzusätze erhalten, die in geeigneter Form häufig vor dem Garen zugefügt werden. So ist es beispielsweise möglich, Anteile von Cerealien, Brot oder Backwaren in das Produkt einzuarbeiten. Hierdurch wird ein besonders ausgewogenes Nahrungsprodukt zur Verfügung gestellt. Auch ist es möglich, z.B. Fleisch oder Früchte in getrockneter Form oder z.B. Speck in das Produkt mit einzuarbeiten. Durch das beim erfindungsgemässen Produkt mögliche Einbringen anderer Anteile von Lebensmitteln, deren Spektrum sehr vielseitig sein kann, können neuartige Nahrungsmittel mit verschiedenartigster Geschmackskomponente gebildet werden, die ein optisch harmonisches Erscheinungsbild aufweisen können. Beispielsweise kann der Gewichtsanteil derartiger Zusätze im Bereich von 10 bis 80 Gew.-% schwanken.

Das erfindungsgemässe Fleischprodukt kann weitgehend frei von Fettgewebe erzeugt werden und stellt dann ein besonders hochwertiges Nahrungsmittel dar. In dünn geschnittener Form (in diesem Fall wird man von einem im wesentlichen langgestreckten, plattenförmigen Produkt niedriger Höhe ausgehen), kann es in geeigneter Verpackung als Reiseproviant, Brotauflage, etc. sehr gut dienen.

Es stellt einen Vorteil des erfindungsgemässen Produktes dar, dass dieses in Abhängigkeit von der Form, in der die Garung durchgeführt wird, in nahezu beliebiger Formgebung erzeugt werden kann, wobei das Aussehen eines natürlich gewachsenen Produktes, das häufig den Eindruck rohgetrockneten Fleisches erweckt, gewahrt bleibt. Daher kann das erfindungsgemässe Produkt beispielsweise auch in Form eines ausgelösten Koteletts, in Form von Braten oder Bauernbrot, etc., vorliegen.

Die Herstellung des erfindungsgemässen Fleischproduktes wird nachstehend in einem Ausführungsbeispiel erläutert. das lediglich zur Veranschaulichung dient.

Ausführungsbeispiel

800 kg Rindfleisch der Qualitätsstufe I (schieres Fleisch, von anhaftendem Fett- und Sehnengewebe befreit) werden in faustgrossen Stücken, wie aus der Zerlegung kommend, mit Nitrit-Pökelsalz bzw. Kochsalz, Zucker, Pfeffer (ca. 2,5% Nitrit-Pökelsalz bzw. Kochsalz, 0,5 % Zucker, geringe Pfefferanteile, bezogen auf das Gewicht an Rindfleich) in einem üblichen Menger vermischt und zu taubenei- bis hühnereigrossen Stücken grob gewolft. Anschliessend wird das Rindfleisch während 28 bis 72 h bei +4° bis +6°C gepökelt.

140 kg Rindfleisch der Qualitätsstufe III werden unter Zugabe von Eis und etwa 2,5 % Salz, bezogen auf das Gewicht an Rindfleisch III plus Eis) in einem üblichen Kutter zu einem bindigen Brät fein zerkleinert. Die erhaltenen Anteile von Rindfleisch I und Rindfleisch III werden in einem üblichen Vakuummenger zu einer bindigen Masse bei 10 bis 15°C während 5 bis 8 Minuten zu einer dichten Masse vermischt. Hiernach wird das vermischte Produkt unter Vakuum in einen endlosen Kunststoffschlauch (innen Polyäthylen / aussen Polyamid; Durchmesser ca. 20 cm) eingefüllt und unter Vakuum versiegelt. Dieser gefüllte Schlauch wird sodann in rechteckige Metallformen (500 x 180 x 50mm) eingedrückt und dort glattgestrichen. Hiernach wird auf die Metallformen ein Deckel aufgeschraubt, der einen leichten Kompressionsdruck auf das Fleisch ausübt. Sodann wird die Metallform langsam mittels einer Garkammer in mit Feuchtigkeit gesättigter Atmosphäre stufenweise über 50, 60, 70 und 80°C Aussentemperatur erhitzt. Die Gesamtdauer des Garungsvorganges im Vakuum beträgt 4,5 Stunden. Hiernach wird der Foliensack der From entnommen und das verfestigte Produkt ausgepackt. Dieses wird dann in ein Kunststoffnetz eingegeben und in einem Klimaraum während 3 bis 4 Wochen bei ca. 15°C bei einer Luftfeuchtigkeit (relative Feuchte) von 70 bis 80% gereift. Hierbei wird eine Trocknung auf einen Restwassergehalt von ca. 40%, bezogen auf das Endprodukt, erzielt. In der Endphase des Reifungsvorganges wird während 2 Tagen Rauch in die Klimakammer eingeführt. Das Produkt ist nun unmittelbar zum Verzehr fertig, wobei gegebenenfalls - je nach Geschmacksrichtung - eine oberflächliche Nachwürzung in an sich bekannter Weise vorgenommen werden kann. Zum Verzehr wird das Produkt üblicherweise in Form dünner, geschnittener Scheiben vorgesehen.

Patentansprüche:

1. Getrocknetes Fleischprodukt auf Grundlage von gestückeltem, gewürztem Fleisch mit einem Fettgehalt von 20 Gew.-%
   oder weniger, erhältlich durch
   (a) Zerkleinern von rohem Fleisch,
   (b) (Vakuum)Einbringung des gestückelten Fleisches in
       eine Form,
   (c) Garen der Masse, und
   (d) Trocknung des Produktes,
   dadurch g e k e n n z e i c h n e t ,   dass
   (e) das Garen der Masse in der Form
   (f) unter Vakuum, und
   (g) die Trocknung und Reifung des geformten Produktes
   (h) bei ca. 5 bis 25°C bei einer relativen Feuchte von
       ca. 50 bis 80 % auf einen Restwassergehalt von
       35 bis 50 Gew.-%, bezogen auf das Gewicht des
       Endproduktes unter Verfestigung erfolgt, derart, dass
       das Produkt das Aussehen rohbelassenen, ·
       getrockneten Fleisches besitzt.

2. Fleischprodukt nach Anspruch 1, dadurch erhältlich, dass
   die Garung der vermengten Fleischstücke in einem Kunststoffbeutel oder Naturdarm, der in der Form eingedrückt
   ist, erfolgt.

3. Fleischprodukt nach den Ansprüchen 1 oder 2, dadurch
   erhältlich, dass man die Garung derart durchführt, dass
   die Temperatur im Kern des Fleischproduktes etwa 80°C
   nicht übersteigt.

4. Fleischprodukt nach den Ansprüchen 1 bis 3, dadurch erhältlich, dass man die Trocknung während längerer Zeit in einem üblichen Reiferaum, gegebenenfalls unter gleichzeitiger Räucherung, durchführt.

5. Fleischprodukt nach einem oder mehreren der vorangehenden Ansprüche, dadurch erhältlich, dass man die Trocknung bei ca. 5 bis 15°C bei einer relativen Feuchte von 65 bis 78 % durchführt.

6. Fleischprodukt nach einem oder mehreren der vorangehenden Ansprüche, dadurch erhältlich, dass man die Trocknung im Anschluss an die Garung bei etwa Atmosphärendruck durchführt.

7. Fleischprodukt nach einem oder mehreren der vorangehenden Anssprüche, dadurch erhältlich, dass man die Trocknung bzw. Reifung im Anschluss an die Garung auf einen Restwassergehalt, bezogen auf das Gewicht des Endproduktes, von ca. 35 bis 50 Gew.-% durchführt.

8. Fleischprodukt nach einem oder mehreren der vorangehenden Ansprüche, dadurch erhältlich, dass man die Trocknung auf einen Restwassergehalt von 35 bis 45 % durchführt.

9. Fleischprodukt nach einem oder mehreren der vorangehenden Ansprüche, dadurch erhältlich, dass als Garungsform eine Metallform verwendet wird.

10. Fleischprodukt nach einem oder mehreren der vorangehenden Ansprüche, dadurch g e k e n n z e i c h n e t , dass es weniger als 20 Gew.-% Fett, 30 bis 50 Gew.-% Eiweiss und 35 bis 45 Gew.-% Wasser enthält.

11. Fleischprodukt nach einem oder mehreren der vorangehenden Ansprüche, dadurch g e k e n n z e i c h n e t, dass es aus stückigen Fleischteilen gebildet ist, die unter Ausbildung eines festen porenfreien Verbundes zu einer plattenartigen Form zusammengesetzt sind, dessen Höhe bei 25 bis 55 mm und Breite bei 60 bis 150 mm und dessen Wassergehalt bei 35 bis 45 Gew.-%, bei einem Fettanteil unter 20 Gew.-%, bevorzugt unter 15 Gew.-%, liegt.

12. Fleischprodukt nach Anspruch 11, dadurch g e - k e n n z e i c h n e t , dass die Schnittfläche des geschnittenen Produktes das Aussehen natürlich gewachsenen, getrockneten Fleisches besitzt und es von äusserlich wahrnehmbaren Würzüberzügen auf der Schnittfläche frei ist.

13. Verfahren zur Herstellung des Fleischproduktes nach Anspruch 1, durch die folgenden Verfahrensschritte:
   (a) Zerkleinern von rohem Fleisch,
   (b) (Vakuum)Einbringung des gestückelten Fleisches in eine Form,
   (c) Garen der Masse,
   (d) Reifung bzw. der Trocknung des Produktes,
   g e k e n n z e i c h n e t durch
   (e) Garen der Masse in der bzw. einer Form,
   (f) unter Vakuum, und
   (g) die Trocknung und Reifung des geformten Produktes
   (h) bei ca. 5 bis 25°C bei einer relativen Feuchte von ca. 50 bis 80% auf einen Restwassergehalt von weniger als 70 %, bezogen auf das Gewicht des Endproduktes, unter Verfestigung, derart, dass das Produkt das Aussehen rohbelassenen, gewachsenen, getrockneten Fleisches besitzt.

14. Verwendung des Fleischproduktes nach einem oder mehreren der Ansprüche 1 bis 12 in Form dünner Scheiben als "Produkt für unterwegs".